(19) Europäisches Patentamt
European Patent Office
Office européen des brevets

(11) **EP 1 788 376 A1**

(12) **EUROPÄISCHE PATENTANMELDUNG**

(43) Veröffentlichungstag:
**23.05.2007 Patentblatt 2007/21**

(51) Int Cl.:
*G01N 3/28* (2006.01)

(21) Anmeldenummer: 05405641.1

(22) Anmeldetag: **16.11.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **ETH Zürich**
**8092 Zürich (CH)**

(72) Erfinder: **Hora, Pavel**
**5507 Melingen (CH)**

(74) Vertreter: **Frei Patent Attorneys**
**Frei Patentanwaltsbüro**
**Postfach 1771**
**8032 Zürich (CH)**

(54) **Messung von Duktilitätskennwerten**

(57) Die Erfindung zeichnet sich im Wesentlichen dadurch aus, dass eine Probe (13) des zu charakterisierenden Werkstoffes in einem ersten Schritt mit einem Loch (13.1) versehen wird, woraufhin ein Prüfkörper (1) mit einer sich verjüngenden, beispielsweise konischen Partie ins Loch eingeführt wird, so dass die sich verjüngende Partie an einer umlaufenden Wandfläche (13.2) des Lochs oder deren oberen Kante ansteht. Beim weiteren Eindrücken des Prüfkörpers ins Loch weitet sich dieses radial leicht auf. Die radiale Aufweitung des Lochs (welche bspw. durch die Eindringtiefe des Prüfkörpers ermittelt werden kann) in Abhängigkeit der zu verwendenden Kraft ist ein Mass für die Duktilität des Werkstoffes, insbesondere für dessen Streckgrenze $R_{p02}$.

Fig. 4

**Beschreibung**

Die Erfindung betrifft ein Verfahren und eine Einrichtung zur Messung von Duktilitätskennwerten metallischer Werkstoffe.

Mechanische Eigenschaften metallischer Werkstoffe werden durch die Angaben der Streckgrenze ($R_{p02}$), der Zugfestigkeit ($R_m$) und der Bruchdehnung (A) resp. der Gleichmassdehnung (Ag) spezifiziert. Die Messung erfolgt üblicherweise im Zugversuch und ist normiert (DIN 50145).

Die klassische Messung im Zugversuch setzt die Fertigung von genormten Zugproben (DIN 50125) voraus, weshalb diese Messmethode teuer und zeitintensiv ist.

Gerade im Bereich der Stahlproduktion, wo eine möglichst lückenlose Qualitätskontrolle gefragt ist, fallen pro Tag oft mehrere hundert solcher Prüfungen an. Deshalb spielen die Prüfkosten einerseits und die durch die Qualitätskontrolle verursachten Verzögerungen bei der Auslieferung des Materials andererseits eine wichtige Rolle.

Aus diesem Grund ist man bestrebt, Prüfverfahren einzusetzen, welche schneller und mit einem geringen Zusatzaufwand verbunden sind.

Oft wurde deshalb der Einsatz der einfacheren (Mikro-) Härtemessung versucht. Dieses Verfahren beruht darauf, dass ein Prüfkörper an der Oberfläche des zu prüfenden Materials angesetzt wird und mit einem Druck beaufschlagt wird, so dass er ein wenig in diesen eindringt. Dieses Verfahren weist jedoch zwei entscheidende Schwächen auf:

- Die Festigkeitswerte können nur indirekt erfasst werden. Sie müssen aus den Härtewerten errechnet werden.

- Da beim Härtemessverfahren im Bereich der Prüfkörpereindringung grosse Dehnungen auftreten, können zwar $R_m$-Wert erfasst werden. Der beim Dehnungswert 0.2% liegende Streckgrenzwert $R_{p02}$ kann jedoch nicht gemessen werden. Gerade dieser ist aber für viele Anwendungen besonders interessant.

Es ist demnach Aufgabe der Erfindung, ein Verfahren und eine Einrichtung zur Messung von Duktilitätskennwerten von Werkstoffen zu erfassen, welches im Vergleich zu den klassischen Zugversuchen weniger aufwendig ist und möglichst nicht zu hohe Anforderungen an die zu vermessenden Materialproben stellt. Vorzugsweise sollte das Verfahren dazu geeignet sein, Informationen über die Materialeigenschaften bei kleinen Dehnungen zu liefern, insbesondere über den Streckgrenzwert $R_{p02}$.

Diese Aufgabe wird gelöst durch die Erfindung wie sie in den Patentansprüchen definiert ist.

Die Erfindung zeichnet sich im Wesentlichen dadurch aus, dass eine Probe des zu charakterisierenden Werkstoffes in einem ersten Schritt mit einem (Prüf-) Loch versehen wird, woraufhin ein Prüfkörper mit einer sich verjüngenden, beispielsweise konischen Partie ins Loch eingeführt wird, so dass die sich verjüngende Partie an einer umlaufenden Wandfläche des Lochs oder deren oberen Kante ansteht. Beim weiteren Eindrücken des Prüfkörpers ins Loch weitet sich dieses radial leicht auf. Die radiale Aufweitung des Lochs (welche bspw. durch die Eindringtiefe des Prüfkörpers ermittelt werden kann) in Abhängigkeit der zu verwendenden Kraft ist ein Mass für die Duktilität des Werkstoffes. Die gemessene Kraft kann bei Bedarf in den Wert $R_{p02}$ umgerechnet werden.

Dieses Verfahren erlaubt die Verwendung bestehender Härtemess-Geräte zusammen mit einem eigens angefertigten Prüfkörper. Es besteht für den Anwender des Verfahrens keine Notwendigkeit zur Anschaffung von teurem Spezialgerät. Trotzdem ist das zu Grunde liegende Messkonzept sowohl von der Art des aufgebrachten Belastungszustandes, vom Messbereich der durch die Messung hervorgerufenen Spannung als auch von der Genauigkeit der Messdaten viel sensitiver als die heutigen Härtemessverfahren.

Der erfindungsgemässe Ansatz ermöglicht, dass zwischen dem Prüfkörper und der Probe beim Eindringen keine Kontaktflächen vorhanden sind, welche im Bezug auf Prüfkörper- und Lochachse "flach" sind, d.h. bspw. einen Winkel von mehr als 20° aufweisen. Im Gegensatz zu auf der Härtemessung basierenden Verfahren treten daher beim erfindungsgemässen Verfahren bei nicht zu grossen angewandten Kräften keine grossen Dehnungen auf. Vielmehr können die verursachten Dehnungen auf kleine Werte beschränkt werden, wodurch insbesondere das Fliessverhalten bei kleinen Dehnungen gemessen werden kann. Es kann also ein Mass für die Streckgrenze $R_{p02}$ ermittelt werden.

Ein weiterer Unterschied zum Härtemessverfahren liegt im Spannungszustand, welcher in der Probe induziert wird. Dieser ist in der ersten Hauptspannung positiv. Daher liegt er nah am Spannungszustand des (normgemässen) Zugversuches.

Das Verfahren ist einfach durchzuführen. Die Messvorbereitung reduziert sich auf das Anbringen des Loches in einer geeigneten Probe, was deutlich günstiger ist als die Anfertigung von Normproben für den Zugversuch.

Das Verfahren ist auch miniaturisierbar. Das Loch kann von einem sehr kleinen Durchmesser und von geringer Tiefe sein. Bspw. kann der Lochdurchmesser 5 mm oder weniger betragen. Dadurch wird nur wenig Material für die Durchführung der Materialprüfung benötigt.

Das Loch kann ein Senkloch sein, in welchem Fall die Probe unter Umständen kein separates Teststück sein muss; das Loch kann in einem dann als Probe dienenenden grösseren Materialstück vorgesehen sein.

Das Loch kann aber auch durchgehend sein, in welchem Fall die Probe mit Vorteil scheiben- oder plättchenartig ausgebildet ist.

Das Loch kann sich gegen innen (d.h. mit zunehmendem Abstand von der Oberfläche, von welcher her das Ende des Prüfkörpers eingeführt wird) hin verengen, wobei die umlaufende Wandfläche und die sich verjüngende Partie des Prüfkörpers aufeinander abgestimmt sind, sodass der Kontaktbereich genau definiert ist. Dadurch wird bspw. die numerische Bestimmung von Duktilitätskennwerten wie $R_{p02}$ ermöglicht. In Fällen, in welchen qualitative oder ungefähre Angaben genügen, muss sich das Loch auch nicht gegen innen verengen, sondern kann bspw. zylindrisch sein.

Besonders bevorzugt ist die Variante, in welcher sowohl der Prüfkörper als auch das Loch konisch sind, wobei der Öffnungswinkel (Winkel zwischen einer Prüfkörper-Achse bzw. Loch-Achse und der Oberfläche der konischen Partie bzw. der umlaufenden Wandfläche) beider Koni gleich ist.

Beim Eindrücken des Prüfkörpers in die Probe entsteht auch eine Reibspannung. Bei gleichbleibenden Reibbedingungen ist diese jedoch anteilsmässig annähernd konstant, sodass sie aus der Kraftmessung eliminiert werden kann. Auch kann man ihr Rechnung tragen, indem reproduzierbare Bedingungen geschaffen werden, d.h. indem man verschleissarme Prüfkörper verwendet sowie immer denselben Schmierstoff in immer gleichen Mengen benutzt.

Die Messung kann erfolgen, indem während kurzer Zeit eine definierte Kraft auf den Prüfkörper einwirkt und die Eindringtiefe (der Weg in axialer Richtung zwischen der Position bei kraftlosem Anstehen des Prüfkörpers an der Wandfläche und der Position unter Krafteinwirkung) gemessen wird. Anschliessend kann ein Vergleich mit Standardmessungen an bekannten Proben und/oder die Bestimmung einer Kennzahl erfolgen. Letzteres geschieht bspw. durch numerische (i.a. näherungsweise) Berechnung oder mit Hilfe von Tabellen.

Noch aussagekräftiger sind Messungen, bei welchen die Abhängigkeit der Eindringtiefe (bzw. der Aufweitung/Deformation des Lochs) von der angewandten Kraft oder umgekehrt die Abhängigkeit der aufzubringenden Kraft von der Eindringtiefe/Aufweitung bestimmt wird. Bei solchen Messungen wird eine sich in Funktion der Zeit ändernde Kraft zwischen der Probe und dem Prüfkörper angelegt und eine Relation zwischen der radialen Aufweitung des Lochs und dem Kraftverlauf ermittelt. Auch in diesem Fall kann die Qualitätskontrolle anhand eines Vergleichs mit Messungen an bereits charakterisierten Proben und/oder durch numerische Berechung eines Kennwertes - bspw. $R_{p02}$ - erfolgen.

Im Folgenden werden Ausführungsformen der Erfindung anhand von schematischen Zeichnungen beschrieben. In den Zeichnungen zeigen:

- Figuren 1 bis 4 je einen Prüfkörper und eine Probe zur Durchführung des erfindungsgemässen Verfahrens,

- Figur 5 einen Prüfkörper mit Einspann- und Führungspartie,

- Figur 6 sehr schematisch eine Einrichtung zur Durchführung des erfindungsgemässen Verfahrens,

- Figur 7 eine mit dem erfindungsgemässen Verfahren erhaltene Messkurve.

In den Zeichnungen sind gleiche Elemente mit gleichen Bezugszeichen versehen. In mehreren Figuren vorkommende Elemente werden im Folgenden nicht jedesmal von neuem beschrieben.

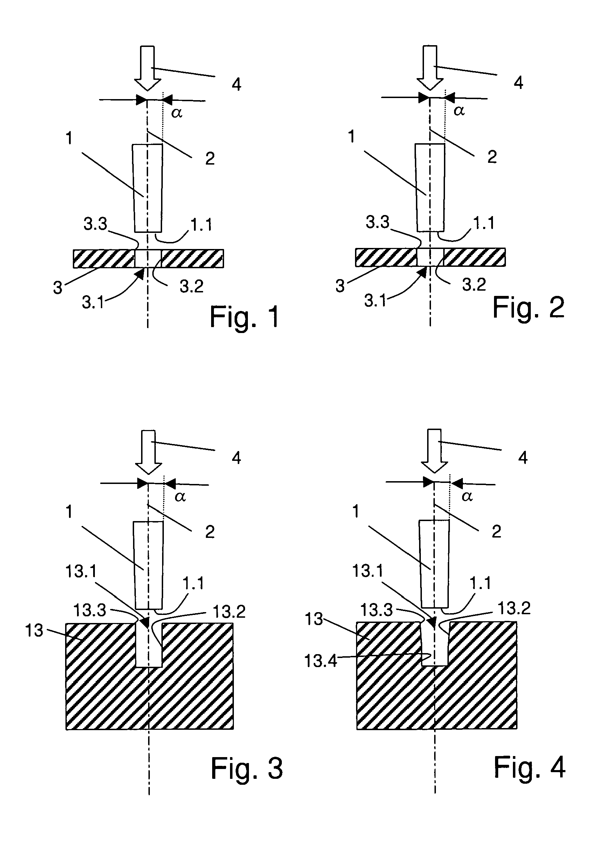

In **Figur 1** ist ein Prüfkörper 1 mit einer Prüfkörper-Achse 2 dargestellt. In Figur 1 wie auch in den folgenden Figuren 2-4 ist der Prüfkörper als ganzes konisch, d.h. der Prüfkörper als Ganzes bildet die vorstehend erwähnte sich verjüngende Partie. Der Konuswinkel $\alpha$ - entsprechend dem halben Öffnungswinkel - beträgt bspw. zwischen 0.2° und 6°, vorzugsweise zwischen 0.2° und 2.5°. Oft wird die sich verjüngende Partie auch durch die "Konizität" definiert, wobei die Konizität $k$ definiert ist als das Verhältnis zwischen dem Unterschied das Körper-Durchmessers an verschiedenen Stellen und dem axialen Abstand dieser zwei Stellen,

also $k = \left(\dfrac{D-d}{h}\right)$. Zwischen dem Konuswinkel $\alpha$

und der Konizität besteht der Zusammenhang

$$\alpha = \arctan\left(\frac{k}{2}\right).$$

Die Probe 3 hat die Form einer Scheibe von bspw. einigen mm Dicke. Sie weist ein Loch 3.1 auf, welches eine umlaufende Wandfläche 3.2 bildet. Der Lochdurchmesser kann in einem weiten Bereich variieren; er kann bspw. - u.U. auf die Probendicke abgestimmt - zwischen 2 mm und 50 mm betragen. Der Durchmesser der konischen Partie des Prüfkörpers 1 ist selbstverständlich auf den Lochdurchmesser abgestimmt Im gezeichneten Beispiel ist das Loch zylindrisch, und die Lochachse fällt im gezeichneten ausgerichteten Zustand mit der Prüfkörper-Achse 2 zusammen. Der Durchmesser des Lochs ist bspw. um mindestens einen Faktor 3 kleiner als derjenige der Scheibe, damit die Messresultate nicht durch Randeffekte verfälscht werden können. Selbstverständlich ist in den in Fig. 1 und 2 beispielhaft gezeigten Ausführungsformen mit durchgehendem Loch eine scheibenförmige Ausgestaltung der Probe keine notwendige Voraussetzung. Die Probe kann irgendeine Form mit durchgehendem Loch haben, wobei vorzugsweise lateral (in Bezug auf die Loch-Achse) rund um das Loch herum genügend Probenmaterial vorhanden ist, damit die Randbedingungen keine entscheidende Rolle bei der Ausbildung des Spannungszustandes spielen.

Das untere (d.h. apikale; das Wort "apikal" impliziert nicht, dass der Prüfkörper spitz ist sondern bezeichnet vielmehr lediglich die Seite, auf welcher der Prüfkörper dünner ist und welche dafür vorgesehen ist, in das Loch der Probe eingeführt zu werden) Ende 1.1 des Prüfkörpers kann zumindest ein Stück weit ohne Kraftaufwand in das Loch 3.1 eingeführt werden, bis die konische Partie an der umlaufenden Wandfläche 3.2 oder deren Oberkante 3.3 ansteht. Wenn anschliessend, wie durch einen Pfeil 4 symbolisiert, der Prüfkörper nach unten bzw. gegen innen, also gegen die Probe und in diese hinein gedrückt wird, weitet sich das Loch 3.1 mindestens in einem oberen Bereich radial auf, wodurch im der Probe ein Spannungszustand erzeugt wird. Die Ausweitung - aufgrund der Geometrie hängt diese unmittelbar mit der Eindringtiefe des Prüfkörpers zusammen - in Abhängigkeit der Kraft ist ein Mass für die elastische oder plastische Deformation der Probe.

In der Variante gemäss **Figur 2** ist das Loch 3.1 nicht zylindrisch sondern wie der Prüfkörper konisch, vorzugsweise mit demselben Konuswinkel α. Nach dem Einführen des Prüfkörpers 1 ins Loch 3.1 steht dieser bspw. entlang der ganzen Tiefe des Lochs auf der umlaufenden Wandfläche 3.2 auf, so dass die Kontaktfläche zwischen dem Prüfkörper und der umlaufenden Wandfläche 3.2 während des ganzen Eindringvorgangs definiert und (bis auf die leichte Vergrösserung aufgrund der Aufweitung des Lochs) konstant ist. Dies bringt - auf Kosten des leicht erhöhten Fertigungsaufwands bei der Probenerstellung - eine verbesserte Reproduzierbarkeit der Messresultate und eine vereinfachte Berechnung von numerischen Kennzahlen mit sich.

Die Probe 31 gemäss **Figur 3** ist nicht scheiben- oder plättchenförmig ausgebildet, sondern kann irgendeine Form haben und beliebig gross - für Simulationsrechnungen theoretisch unendlich gross - sein. Das Loch 13.1 ist nicht durchgehend sondern ein Senkloch mit endlicher Tiefe. Die Tiefe des Lochs ist so gewählt, dass beim Eindrücken des Presskörpers dieser mit seinem apikalen Ende keinesfalls an der Grundfläche des Lochs anstehen kann. Wie in der Ausführungsform gemäss Figur 1 ist das Loch zylindrisch, was eine besonders einfache Probenherstellung ermöglicht. In der Figur sind mit 13.2 die umlaufende Wandfläche und mit 13.3 deren obere Kante bezeichnet, auf welcher der Prüfkörper aufsteht, wenn er nicht mit Druck beaufschlagt wird.

In der Ausführungsform gemäss **Figur 4** ist die Probe 13 so ausgebildet, dass die umlaufende Wandfläche des Senklochs 13.1 eine konische Partie 13.2 aufweist, an welche zum Probeninneren hin eine zylindrische Partie 13.4 anschliesst. Der Konuswinkel der konischen Partie 13.2 entspricht wie in Figur 2 dem Konuswinkel α des Prüfkörpers, so dass dieser im kraftlosen Zustand entlang der ganzen Länge der konischen Partie 13.2 auf der umlaufenden Wandfläche ansteht. Die zylindrische Partie 13.4 - es könnte im Prinzip auch eine zweite konische Partie mit einem steileren Konuswinkel als die konische Partie 13.2 sein - dient dazu, dass die Kontaktfläche zwischen Prüfkörper und umlaufender Wandfläche während des ganzen Eindrückvorgangs auf die konische Partie 13.2 beschränkt und damit definiert ist. Auch in dieser Ausführungsform sollten die Abmessungen des Prüfkörpers 1 und des Lochs 13.1 so aufeinander abgestimmt sein, dass zumindest im Bereich kleiner Deformationen des Materials in der Umgebung der Wandfläche - also beim Übergang zwischen elastischen und plastischen Deformationen - das apikale Ende des Prüfkörpers nicht an der Grundfläche des Lochs ansteht, weil ansonsten wie bei Härtetestmessungen lokal sehr grosse Dehnungen auftreten, was Aussagen über die Streckgrenze erschweren bzw. verunmöglichen würde.

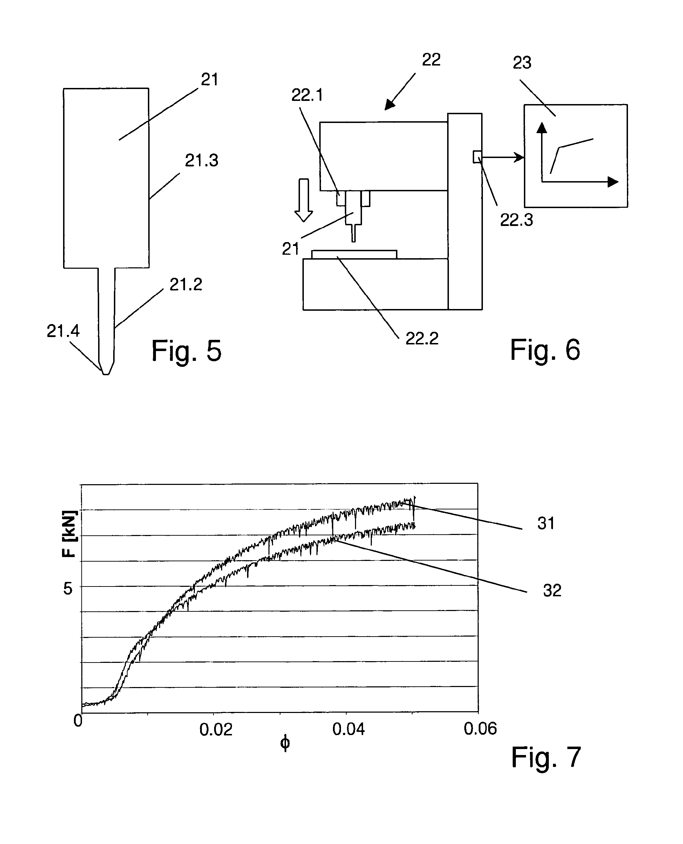

Der Prüfkörper 21 gemäss **Figur 5** weist neben der konischen Partie 21.2 auch eine zylindrische Partie 21.3 (Einspannpartie) grösseren Durchmessers auf, welche bspw. dazu dient, den Prüfkörper mittels einer Einspannvorrichtung eines Geräts zu befestigen, durch welches der Prüfkörper mit einer definierten Kraft beaufschlagt werden kann. Zweckmässigerweise ist der Prüfkörper am apikalen Ende flach, wie das in den vorstehenden Figuren gezeichnet ist. Abweichend davon kann eine optionale am apikalen Ende an die konische Partie 21.2 anschliessende Abschrägung 21.4 oder Spitze bspw. dem Bediener als Hilfe beim Ausrichten während eines Einspannvorgangs dienen.

Eine Einrichtung zum Ermitteln von Duktilitätseigenschaften von Werkstoffen ist in **Figur 6** schematisch gezeichnet. Die Einrichtung weist ein Gerät 22 auf, mit welchem zwischen einem Prüfkörper 21 und einem Gegenstück (hier einer Grundplatte 22.2) eine definierte Kraft angelegt werden und die Auslenkung in Abhängigkeit dieser Kraft bestimmt werden kann. Eine Einspannvorrichtung 22.1 des Gerätes dient zum Haltern des Prüfkörpers 21. Das Gerät besitzt Mittel zum Erfassen der Eindringtiefe des Prüfkörpers in die Probe. Vorzugsweise wird die Eindringtiefe elektronisch bestimmt. Das Gerät besitzt dann bspw. eine Schnittstelle, durch welche Messdaten an eine Auswertevorrichtung 23 - bspw. einen PC - übermittelt werden können. Die Auswertevorrichtung kann auch im Gerät selbst integriert sein. Im Prinzip ist aber auch denkbar, dass die Eindringtiefe durch einen Benutzer an einer geeigneten Zeigeeinrichtung ablesbar ist so dass keine elektronische Übermittlung von Messdaten an eine Auswertevorrichtung erforderlich ist.

Das Gerät 22 kann optional bis auf den Prüfkörper und implementierte Auswerteverfahren in der Art eines konventionellen Härtemessgeräts ausgebildet sein. Es sind aber auch mobile Geräte denkbar.

In **Figur 7** ist das Resultat einer Messung dargestellt, welche mittels des erfindungsgemässen Verfahrens unter Verwendung eines Prüfkörpers mit einer Konizität $k$ von 1:50 und einer Probe mit mittlerem Lochdurchmesser $D_{m0}$ von 5 mm vorgenommen wurde. Gemessen wurde die aufzuwendende Kraft F in Funktion der logarithmischen Deformation φ, welche in folgender Weise von der Eindringtiefe s abhängt:

$$\varphi = \ln\left(\frac{s \cdot k/2}{D_{m0}/2} + 1\right).$$ Die erste Kurve 31 zeigt eine Messung an gezogenem

Stahl, die zweite Kurve 32 an gerichtetem Stahl. Die Messung zeigt, dass ein signifikanter Unterschied festgestellt wird, was bspw. mit Härtemessungen nicht zuverlässig möglich ist.

Aus einer Kurve wie den in Figur 7 gezeigten können Kennzahlen wie die Streckgrenze $R_{p02}$ numerisch berechnet werden. Für die Anwendung in der Werkstoffproduktion und -güteprüfung ist das aber oft gar nicht notwendig. Vielmehr ist es möglich, vorgängig eine oder mehrere einmalige Referenzmessung/en an einem Werkstoff vorzunehmen, welcher bspw. auch mit einer aufwendigeren Methode wie einem Zugversuch charakterisiert wurde und vorgegebene Qualitätsanforderungen knapp erfüllt. Beispielsweise kann mindestens eine Referenzmessung an einem Werkstoff vorgenommen werden, welcher den minimal zulässigen Streckgrenzwert aufweist, ggf. ergänzt durch eine Referenzmessung an einem Werkstoff, welcher, sofern vorhanden, den maximal zulässigen Streckgrenzwert aufweist. Diese Referenzmessungen können als Grenzlinien verwendet werden. Mit dem erfindungsgemässe Verfahren charakterisierte Proben, deren gemessene Kurve - zumindest in einem interessierenden Bereich - unterhalb der unteren Grenzlinie oder ggf. oberhalb der oberen Grenzlinie liegen, sind Ausschuss.

Abschliessend sei noch erwähnt, dass die vorstehend beschriebenen Ausführungsbeispiele keinesfalls den einzigen Weg zur Ausführung der Erfindung darstellen. Vielmehr sind innerhalb der erfinderischen Lehre mannigfache verschiedene Ansätze und Variationen möglich. Beispielsweise können anstelle der Prüfkörper mit einer konischen Partie auch andere Prüfkörper mit einer sich gegen ein apikales Ende hin verjüngenden Partie verwendet werden. Eine solche kann bspw. als eine Art verallgemeinerter Konus, also als Sektor eines Kegels mit einer nicht kreisförmigen (sondern bspw. elliptischen, eckigen etc.) Grundfläche vorhanden sein. Auch andere konvexe oder konkave Formen sind denkbar, wobei aus fertigungstechnischen Gründen und aus Gründen der Reproduzierbarkeit und Analysierbarkeit der Messung die konische Form bevorzugt wird.

## Patentansprüche

1. Verfahren zum Ermitteln von Duktilitätseigenschaften von Werkstoffen mittels eines Prüfkörpers (1, 21), **dadurch gekennzeichnet, dass** der Prüfkörper eine sich gegen ein apikales Ende hin verjüngende Partie aufweist, dass eine Probe (3, 13) aus dem Werkstoff in einem ersten Schritt mit einem Loch (3.1, 13.1) versehen und anschliessend das apikale Ende des Prüfkörpers (1, 21) in das Loch eingeführt wird, und der Prüfkörper mit einer definierten Kraft gegen die Probe gedrückt wird, wobei die sich verjüngende Partie an einer umlaufenden Wandfläche (3.2, 13.2) des Lochs ansteht, so dass sich das Loch durch das Drücken des Prüfkörpers gegen die Probe radial aufweitet, und dass ein Mass für die radiale Aufweitung des Lochs ermittelt und daraus auf Duktilitätseigenschaften geschlossen wird.

2. Verfahren nach Anspruch 1, **dadurch gekennzeichnet dass** die umlaufende Wandfläche (3.2, 13.2) des Lochs so ausgebildet ist, dass sich das Loch (3.1, 13.1) mit zunehmendem Abstand von der Oberfläche, von welcher her das Ende des Prüfkörpers eingeführt wird, verengt.

3. Verfahren nach Anspruch 2, **dadurch gekennzeichnet, dass** die Verläufe der sich verjüngenden Partie des Prüfkörpers und der umlaufenden Wandfläche so gewählt werden, dass sie aufeinander abgestimmt sind.

4. Verfahren nach Anspruch 3, **dadurch gekennzeichnet, dass** Neigungswinkel ($\alpha$) der sich verjüngenden Partie des Prüfkörpers und der umlaufenden Wandfläche (3.2, 13.2) gleich sind.

5. Verfahren nach einem der vorangehenden Ansprüche, **dadurch gekennzeichnet, dass** die sich verjüngende Partie konisch verläuft.

6. Verfahren nach Anspruch 5, **dadurch gekennzeichnet, dass** die konische Partie so ausgestaltet wird, dass ihr Verlauf durch einen Winkel zwischen der Oberfläche der konkischen Partie und einer Prüfkörper-Achse charakterisierbar ist und dass der Öffnungswinkel maximal 20° beträgt.

7. Verfahren nach Anspruch 5 oder 6 und Anspruch 4, **dadurch gekennzeichnet, dass** das Loch mindestens abschnittweise konisch ist und dass die Konuswinkel ($\alpha$) des konischen Abschnitts des Lochs und der sich verjüngenden Partie des Prüfkörpers identisch sind.

8. Verfahren nach einem der vorangehenden Ansprüche, **dadurch gekennzeichnet, dass** das Loch (13.1) ein Senkloch ist.

9. Verfahren nach einem der Ansprüche 1 bis 7 **dadurch gekennzeichnet, dass** das Loch (3.1) durchgehend ist.

10. Verfahren nach einem der vorangehenden Ansprüche, **dadurch gekennzeichnet, dass** eine sich in Funktion der Zeit ändernde Kraft zwischen der Probe und dem Prüfkörper angelegt und eine Relation zwi-

schen der die radiale Aufweitung des Lochs und dem Kraftverlauf ermittelt wird.

**11.** Einrichtung zum Ermitteln von Duktilitätseigenschaften von Werkstoffen mit einem Prüfkörper (1, 21) und einem Gerät (22) zum Applizieren einer definierten Kraft zwischen dem Prüfkörper und einer Probe (3, 13), **dadurch gekennzeichnet, dass** der Prüfkörper eine sich gegen ein apikales Ende hin verjüngende Partie aufweist, die dafür geeignet ist, an einer umlaufenden Wandfläche (3.2, 13.2) eines vorgängig angebrachten Lochs (3.1, 13.1) in der Probe anzustehen, so dass sich das Loch durch das Drükken des Prüfkörpers gegen die Probe radial aufweitet, und dass das Gerät ferner Mittel zum Erfassen einer Eindringtiefe des Prüfkörpers in die Probe aufweist.

Fig. 1

Fig. 2

Fig. 3

Fig. 4

21

21.3

21.2

21.4

**Fig. 5**

22

22.1

23

22.3

21

22.2

**Fig. 6**

F [kN]

5

0

0.02

0.04

0.06

φ

31

32

**Fig. 7**

**Europäisches Patentamt**

## EUROPÄISCHER RECHERCHENBERICHT

Nummer der Anmeldung

EP 05 40 5641

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "Appendix 3.5: Stretch Flanging & Hole Expansion" AHSS GUIDELINES, REVISION 24.3.2004, [Online] 8. Juli 2004 (2004-07-08), XP002376034 Gefunden im Internet: URL:http://www.worldautosteel.org/AHSSGuid elinesDocs/3_5_AHSS_Flanging.pdf> [gefunden am 2006-04-06] * Absatz A.3.5 * * Abbildung A.3.5-a * ----- | 1,2,5,6, 8-10 | G01N3/28 |
| A | PATENT ABSTRACTS OF JAPAN Bd. 007, Nr. 075 (P-187), 29. März 1983 (1983-03-29) -& JP 58 006442 A (SHIN NIPPON SEITETSU KK; others: 01), 14. Januar 1983 (1983-01-14) * Zusammenfassung * ----- | 1-11 | |
| A | FANG X; FAN Z; RALPH B; EVANS P; UNDERHILL R: "The relationships between tensile properties and hole expansion property of C-Mn steels" JOURNAL OF MATERIALS SCIENCE (2003), Bd. 38, Nr. 18, 15. September 2003 (2003-09-15), Seiten 3877-3882, XP002376035 * das ganze Dokument * ----- | 1-11 | RECHERCHIERTE SACHGEBIETE (IPC) G01N |
| A | "Type R Hand-Operated Ductility Testing Machine" TINIUS OLSEN PRODUCT PROSCPECT, [Online] 22. April 2001 (2001-04-22), XP002376036 Gefunden im Internet: URL:http://www.tiniusolsen.com/products/p-handop.html> [gefunden am 2006-04-06] * das ganze Dokument * ----- | 1-11 | |

Der vorliegende Recherchenbericht wurde für alle Patentansprüche erstellt

| Recherchenort | Abschlußdatum der Recherche | Prüfer |
|---|---|---|
| München | 6. April 2006 | Timonen, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 40 5641

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2006

| Im Recherchenbericht angeführtes Patentdokument | Datum der Veröffentlichung | Mitglied(er) der Patentfamilie | Datum der Veröffentlichung |
|---|---|---|---|
| JP 58006442 A | 14-01-1983 | JP 1477328 C<br>JP 63026328 B | 27-01-1989<br>30-05-1988 |

EPO FORM P0461

Für nähere Einzelheiten zu diesem Anhang : siehe Amtsblatt des Europäischen Patentamts, Nr.12/82